Europäisches Patentamt

European Patent Office

Office européen des brevets

(11) Publication number: **0 269 059**
**A2**

# EUROPEAN PATENT APPLICATION

(21) Application number: 87117290.4

(22) Date of filing: 24.11.87

(51) Int. Cl.4: **C08F 246/00** , C08F 220/04 ,
C08F 220/12 , C09D 3/80

(30) Priority: 24.11.86 US 934255

(43) Date of publication of application:
01.06.88 Bulletin 88/22

(84) Designated Contracting States:
BE DE ES FR GB IT NL SE

(71) Applicant: E.I. DU PONT DE NEMOURS AND
COMPANY
1007 Market Street
Wilmington Delaware 19898(US)

(72) Inventor: Aerts, Armand
Driesstraat 26
B-3386 Bekkevoort(BE)
Inventor: Simmendinger, Peter
H. Consciencelaan 3
B-2970 Hever(BE)

(74) Representative: Abitz, Walter, Dr.-Ing. et al
Abitz, Morf, Gritschneder P.O. Box 86 01 09
D-8000 München 86(DE)

(54) Aqueous polymer dispersion for use in automotive basecoat under solvent clear coat.

(57) An aqueous acrylic dispersion with higher polarity outside than inside the particles is useful in an automotive basecoat under a solvent-based clear coat.

EP 0 269 059 A2

## Aqueous Polymer Dispersion for use in Automotive Basecoat Under Solvent Clear Coat

### BACKGROUND

The present invention involves aqueous acrylic polymer dispersions. More particularly, it involves such dispersions useful in making pigmented aqueous basecoats to be overlaid by solvent-based clear coats.

Waterborne polymer dispersions are widely used in paint formulations. However, the usage in automotive paint systems involving a pigmented basecoat overlaid by a clear coat (known as color coat/clear coat or cc/cc) requires certain properties of the dispersion copolymer as well as from the paint formulation. For use in a cc/cc system, it is necessary that the basecoat resists the attack of the solvents of the clear.

U.S. Patent 4,403,003, Backhouse (1983), concerning an aqueous basecoat with crosslinked Polymer microparticles, sometimes used with acrylic copolymer Acrysol ASE60 from Rohm & Haas,

U.S. Patent 4,220,679, Backhouse (1980), concerning a smiliar solvent-based basecoat, and

U.S. Patent 4,322,328, Graetz and Thompson (1982), concerning emulsion polymerization of sterically stabilized acrylic polymers useful in such basecoats, and

British Patent 1,454,405, Hart and Maska (1976), concerning polymerization of acrylic particles in solvent for later inversion into water, are all relevant to cc/cc systems.

A particularly difficult challenge arises when one wants to apply a solvent-based clear coat over an uncured aqueous basecoat. After flash drying but before baking the basecoat, it is desirable to be able to apply a solvent-based clear coat without significant interpenetration or disturbance of the pigment orientation in the basecoat. As the basecoat dries, flake pigments such as mica, pigment-coated mica, or aluminum or other metal flake, tends to orient parallel to the substrate. Preserving this orientation in the cured multi-layer film is desirable. It gives well known and valued visual effects including that known as flop.

Of course, if the basecoat is cured before the clear coat is applied, that leads to crosslinking and very high molecular weight. This should minimize interpenetration. Also, the use in the basecoat of microgels or microparticles crosslinked in the core can minimize interpenetration.

However, it is desired to be able to have other, different and sometimes superior basecoat systems, especially ones capable of wet-on-wet applications of clear coats before curing the basecoat.

### SUMMARY OF THE INVENTION

The present invention provides an aqueous dispersion of acrylic polymer particles which are not internally crosslinked but which contain functionality that can be crosslinked upon curing a coating made from such dispersion, said particles being made by emulsion polymerization starting with all ingredients as monomers, including, based on the total weight of polymerizable monomers,

3-30% of monomer selected from acrylonitrile, methacrylonitrile, acrylamide and methacrylamide,

2-30% polymerizable unsaturated acid,

0-30% polymerizable unsaturated monomer containing a hydroxyl group,

the balance polymerizable monomer, said particles being insoluble in methylethylketone.

### DETAILED DESCRIPTION

The present invention is thought to solve the interpenetration problem by providing an aqueous polymer dispersion for the basecoat which has high polarity on the outside of the particles and low polarity inside, along with a reactible emulsifier polymerized into the particles. The high polarity on the outside, such as from acrylonitrile polymerized into the particles, repels the solvent-based clear coat formulation sufficiently to minimize interpenetration. However, on subsequent curing, it is thought that the particle structure is disrupted and the lower polarity monomers on the inside of particles mingle with the other ingredients of the coating system, leading to good adhesion. While not wishing to be bound by any one theory, it is thought that the above description correctly explains how superior results can be obtained with the invention.

The reactible emulsifiers described in the examples, related materials, and some of their uses, are discussed in more detail in U.S. Patent 4,246,387, Deutsch (1981).

These solvent resistant copolymer components are preferably polar because polar monomers will, during the course of the emulsion polymerization, concentrate at the particle surface. Hence, they will prevent the non-polar parts inside the particle from being dissolved by the solvents of the clear.

A copolymer component such as hydroxypropylmethacrylate is desirable to contribute a functional group which is crosslinkable with an amino resin upon curing to give a thermosetting coating.

Emulsion polymerization usually requires surfactants which are chosen according to the polymer composition to give the desired stability. Useful for the polymer composition mentioned below are ammonium salts of nonylphenyl (ethylene oxide) sulfate. Also suitable are surfactants which have a pendent vinyl group and may be covalently bound to the polymer particle. A combination of an ionic and nonionic dispersant may be used to increase the stability against gross flocculation.

The initiators used should be water-soluble. Preferably a water-soluble radical forming initiator such as ammonium peroxodisulfate is used. The use of monomer soluble initiators would give preponderately a polymerization of the monomer droplets and thus a different particle size and particle size distribution.

Initiator and surfactant types and concentrations and polarity and water-solubility of the monomers govern the particle size and particle size distribution of the aqueous polymer dispersion.

Contrary to solvent-borne coatings, where the viscosity increase during the application arises from the evaporation of selected low boiling solvents, the viscosity build-up of a waterborne coating has to come from the pseudoplastic or thixotropic behavior of the paint. This is because ambient conditions control the evaporation of water and thus the visocsity increase during spraying. Furthermore, a quick viscosity recovery is necessary to prevent the coating from running and sagging. Pseudoplastic properties are calculated by dividing the apparent visocisity at low shear by the apparent visocisity at high shear. This factor is called the shearthinning factor.

Shearthinning of the aqueous polymer dispersion of the invention can be increased by adding a thermodynamically good solvent for the polymer such as dialkyl phthalate. Also increasing the viscosity of the continuous phase by means of a water-soluble polymer results in markedly higher shear thinning. About 30% by weight based on binder solids of propylene glycol or ethylene glycol monobutyl ether such as butyl cellosolve from Union Carbide and/or lightly crosslinked thickener particles of methyl methacrylate and acrylic acid, such as Rohm & Haas Acrysol ASE60, can improve shearthinning. The basecoats prepared from these aqueous dispersions still contain an amino resin to crosslink the particles.

Furthermore, a coalescing agent such as butyl cellosolve is desirable.

The aluminum pigment used in the basecoat is stabilized by mans of a carboxyl-containing acrylic resin and is protected from water attack by an organophosphate.

Parts, percentages and proportions herein are by weight except where indicated otherwise.

EXAMPLE I

A. Aqueous Dispersion

The following dispersion was prepared in a reaction vessel fitted with stirrer, thermometer, reflux condenser and means for controlled introduction of an initiator solution and a monomer mix.

To a 5 l reactor was charged:

(i)

1900 g demineralized water there was added a mixture of

(ii)

2 g methylmethacrylate

4 g reactible emulsifier.

The reactible emulsifier used is a neutralized surfactant of 30% solids in water of the half ester of maleic anhydride of nonyl phenol (ethylene oxide)$_n$ sulfonic acid, with n about 6, made as follows:

50 g Polystep RA 90 (Stepan Chemical Co., Northfield, IL, U.S.A.

100 g deionized water

Slowly neutralized with 3.3 meq/g or

15 g dimethyl ethanolamine

165 g reactible emulsifier (Polystep RA 90-30-100)

heated to 80°C and kept for 15 min.

The following two mixtures (iii), (iv) were prepared:

(iii)

930 g methylmethacrylate

90 g acrylonitrile

180 g styrene

510 g butylacrylate
40 g methacrylic acid
14 g reactible emulsifier
(iv)
4 g ammoniumperoxidisulfate
3 g sodium hydrogen carbonate
183 g demineralized water
To the reactor was fed
80 g (iii)
The temperature kept at 80°C for 15 min., then was added:
40 g (iv)
and kept at 80°C for 15 min.

To (iii) was added:
70 g hydroxypropylmethacrylate and this mixture, as well as the initiator solution (iv), fed separately over 5 hrs. at 80°C. Afterwards the temperature was kept for 1 hr. at 80°C, the mixture was cooled and filtered. No coagulum was observed.

The latex showed the following properties:
weight solids:    47% (theory 47%)
pH:    6

$$\text{shear factor} : \frac{n \ (1.17 \ \text{sec}^{-1})}{n \ (1170 \ \text{sec}^{-1})} = 8.5$$

Mn        175,000
Mw        1,000,000

Molecular weights were determined in tetrahydrofuran using a polystyrene standard, except wherein indicated otherwise.

B. Preparation of Aluminum Millbase

18 g Solution of a resin consisting of polymerized 56% methylmethacrylate, 34% butylacrylate and 10% acrylic acid in 70% isopropanol was mixed with 30 g ethylene glycol monobutylether for 10 minutes, then was slowly added (over 1 hour) 46 g aluminum paste and further mixed 3 hours. To this was then added 1.55 g dimethylaminoethanol and stirred for another 1/2 hour.

C. Preparation of Basecoat Composition

The following premixes were prepared:
(i) 20 g methylmethacrylate-acrylic acid copolymer with about equal parts of each, lightly crosslinked (Acrysol ASE60) from Union Carbide were neutralized by a 25% solution of dimethylaminoethanol to pH 7.65 and demineralized water added up to 192 g.
(ii) To 218 g aqueous polymer dispersion as described in (A) above were added 150 g demineralized water and adjusted to pH 7.65 by adding a 25% solution of dimethylaminoethanol. Premix (i) was slowly added to premix (ii) and stirred for 1 hour.
Then was added a mixture of 77 g water and 34 g melamine formaldehyde resin (Cymel 325) from American Cyanamid, and stirred for 15 minutes.
Then was added 18 g polypropyleneglycol (MW 400) and stirred for 15 minutes.
To this was added 112 g aluminum millbase (B) and stirred for 1 hour. Finally, 16 g 2-ethylhexanol was added and stirred for another 1/2 hour.

## D. Application of Basecoat to a Substrate

The basecoat was adjusted to spray viscosity (viscosities were measured with Haake Rotovisco RV 100, MK 500, MVI) by adding demineralized water.

A shearfactor of 20 [n (1.17 sec$^{-1}$)/n (1170 sec$^{-1}$)] gives a sufficient spray latitude.

A metal panel was prepared with primer, then the basecoat was applied at 25% spray solids in two coats at 75% relative humidity at 23°C. After a flash period of 25 minutes, a commercial solvent-borne clear coat was applied. The panel heated for 1 hour at 130°C. The coating thus obtained showed desirable properties.

## EXAMPLES 2-4 - ACRYLIC LATICES

### Equipment

Use a clean 10 l reactor in a water/oil heater bath fitted with stainless steel stirrer, thermometer, reflux condenser and means for controlled addition of initiator solution and monomer mix. Use the following procedure with the ingredients specified thereafter for each latex.

### Procedure:

1. Charge A to reactor.
2. Add premix D.
3. Put on nitrogen blanket, heat to 85°C for 15 mins.
4. Add 200 g of premix B and maintain at 85°C for 15 mins.
5. Add 100 g of premix E and maintain at 85°C for 15 mins.
6. Blend rest of B with C.
7. Feed rest of E and blend B + C simultaneously over 5 hours, maintaining temperature at 85°C.
8. When feeds are completed, hold 1 hour at 85°C.
9. Cool and filter through 10 um filter bag.
10. Store in plastic can.

## Latex 1

|  |  | g | wt % | mol | mol % |
|---|---|---|---|---|---|
| A. | deionized water | 4750 | | | |
| B. | methylmethacrylate | 1570 | 34.4 | 6.27 | 37 |
|  | acrylonitrile | 215 | 4.8 | 1.62 | 10 |
|  | styrene | 472 | 10.4 | 1.8 | 10 |
|  | butylacrylate | 1888 | 41.4 | 5.89 | 35 |
|  | methacrylic acid | 142 | 3.1 | 0.66 | 4 |
|  | reactible emulsifier | 42.5 | 0.3 | | |
| C. | hydroxypropylmeth-acrylate | 235 | 5.2 | 0.73 | 4 |
| D. | MMA | 5 | 0.1 | | |
|  | reactible emulsifier | 14 | 0.1 | | |
| E. | ammonium peroxydisul-fate initiator $(NH_4O_2S_2O_8$ (98%) | 10 | 0.2 | | |
|  | deionized water | 460 | | | |

Resulting properties:

| Solids | 45.5% |
|---|---|
| pH | 3 |
| Particle size | 0.1-0.2 μm |
| Unreacted emulsifier | 2% |

$$\frac{n\ (1.17\ \text{sec}^{-1})}{n\ (1170\ \text{sec}^{-1})} = 15$$

## Latex 2

|  |  | g | wt % | mol | mol % |
|---|---|---|---|---|---|
| A | deionized water | 4750 | | | |
| B | methylmethacrylate | 1570 | 33.2 | 6.27 | 37 |
|  | acrylonitrile | 215 | 4.5 | 1.60 | 10 |
|  | 2-ethylhexylacrylate | 473 | 10.0 | 1.08 | 6 |
|  | butylacrylate | 2065 | 43.6 | 6.44 | 38 |
|  | methacrylic acid | 143 | 3.0 | 0.66 | 4 |
|  | reactible emulsifier | 42.5 | 0.3 | | |
| C | hydroxypropylmeth-acrylate | 235 | 5.0 | 0.73 | 5 |

| | D | MMA | 5 | 0.1 |
| | | reactible emulsifier | 10 | 0.1 |
| | E | ammonium peroxydisul-fate initiator | 10 | 0.2 |

$(NH_4O_2S_2O_8$ (98%)

deionized water .... 460

**Resulting properties:**

Solids .... 47.5%

pH .... 3.5

Unreacted emulsifier .... 2%

$$\frac{n\ (1.17\ sec^{-1})}{n\ (1170\ sec^{-1})} = 20$$

## Latex 3

| | | | g | wt % | mol | mol % |
|---|---|---|---|---|---|---|
| A | | Deionized water | 4750 | | | |
| B | | methylmethacrylate | 2325 | 50.7 | 9.3 | 52 |
| | | acrylonitrile | 225 | 4.9 | 1.7 | 10 |
| | | styrene | 450 | 9.8 | 1.7 | 10 |
| | | butylacrylate | 1275 | 27.9 | 4 | 22 |
| | | methacrylic acid | 100 | 2.2 | 0.5 | 3 |
| | | reactible emulsifier | 42.5 | 0.3 | | |
| C | | hydroxypropylmeth-acrylate | 175 | 3.8 | 0.5 | 3 |
| D | | MMA | 5 | 0.1 | | |
| | | reactible emulsifier | 10 | 0.1 | | |
| E | | ammonium peroxydisul-fate initiator | 10 | 0.2 | | |

$(NH_4O_2S_2O_8$ (98%)

deionized water .... 460

**Resulting properties:**

Solids .... 46%

pH .... 3

free acid number .... 200 ppm

$$\frac{n\ (1.17\ sec^{-1})}{n\ (1170\ sec^{-1})} = \frac{300\ cP}{20\ cP} = 15$$

7

$$\text{Mw by Quasi Elastic} \quad 2.5 \times 10^6$$
$$\text{Light Scattering}$$

## EXAMPLE 5

Silver Metallic Basecoat Paint

To make a paint binder with a pigment:binder weight ratio of 17:100 and a solids content of 25%. having the following solids proportions:

latex                          74
melamine                       10
polypropyleneglycol            12
Acrysol ASE60 (Rohm & Haas)     4

use the following procedure with the specified ingredients for the desired latex.

| | | |
|---|---|---:|
| I. | Add to mixer Latex blend 1, 2, or 3 diluted with deionized water to a level of 44% solids | 34.90 |
| II. | Add with mixing deionized water | 13.87 |
| III. | Adjust carefully pH with 25% solution of dimethylethanolamine in deionized water to 7.5.  Mix 30 min. | |
| IV. | Add premix A with mixing.  Mix 30 min. Viscosity will increase. Test pH 7.5 – 7.9 | 28.33 |
| V. | Add premix B with mixing.  Mix 30 min. | 6.67 |
| VI. | Add polypropyleneglycol (Mw 425). Mix 30 min. | 2.56 |
| VII. | Add slowly with mixing aluminum millbase C. | _13.67_ |
| | | 100.00 |

Viscosity at 25% solids:
 at high sheer rates (1170 sec⁻¹) - 100-160 cP
 at low sheer rates (1.17 sec⁻¹) - 9000-10000 cP
Viscosity at 20% spray solids:
 at (1170 sec⁻¹)    -80-100 cP
 at (1.17 sec⁻¹)    -4000-5000 cP

8

Premix <u>A</u> - Acrylic Copolymer Solution

    Add to mixer deionized water    84.51
    Add with mixing Acrysol ASE60    10.79
    Add slowly with high speed mixing 25% solution of dimethylethanolamine in deionized water    4.70
Mix 30 minutes. Test PH 7.5-7.9. If necessary, adjust with 25% solution dimethylethanolamine in deionized water.

Premix <u>B</u> - Melamine Solution

    Add to mixer melamine formaldehyde resin (Cymel 325) from American Cyanamid    2.67
    Add with mixing deionized water    4.00
    Mix 10 minutes until Premix B completely clear.

Premix <u>C</u> - Aluminum Millbase

    Add to propeller mixer butyl cellosolve    8.00
    Add aluminum flake of Example 1 very slowly with mixing over 1 hour. Mix another 1 hour.    5.67

**Claims**

1. An aqueous dispersion of acrylic polymer particles which are not internally crosslinked but which contain functionality that can be crosslinked upon curing a coating made from such dispersion, said particles being made by emulsion polymerization starting with all ingredients as monomers, including, based on the total weight of polymerizable monomers,

    3-30% of monomer selected from acrylonitrile, methacrylonitrile, acrylamide and methacrylamide,

    2-30% polymerizable unsaturated acid,

    0-30% polymerizable unsaturated monomer containing a hydroxyl group,

    the balance polymerizable monomer, said particles being insoluble in methylethylketone.

2. The dispersion of Claim 1 wherein the acrylic monomers include, in percent by weight based on the particles:

    3-15% acrylonitrile;

    3-15% hydroxypropylmethacrylate or acrylate;

    up to 30% styrene;

    up to 3% acrylic acid; and

    water soluble initiator; and

    the balance acrylic or methacrylic monomer having a glass transition temperature below -20°C.

3. The dispersion of Claim 2 wherein the monomer of the balance is butyl acrylate.

4. The dispersion of Claim 2 having an average particle size in the range of 0.16 - 0.19 $\mu$m.

5. The dispersion of Claim 2 having a pH of about 7.5 - 7.9.

6. The dispersion of Claim 2 wherein the particles have a weight average molecular weight of about 2 million.

7. An aqueous coating composition suitable for use at an automotive base coat, comprising a dispersion of claim 1.

8. A multi-layer coating system on a substrate comprising a basecoat of a dispersion of Claim 1 overlaid with a solvent-based clear coat.

9. The system of Claim 8 wherein there is no significant interpenetration of the clear coat into the basecoat.

10. A process of applying a multi-layer coating system of Claim 8 to a substrate in which the baseocat is applied, and before it is cured, the clear coat is applied, then the multi-layer system is cured together.